# EUROPEAN PATENT APPLICATION

(11) **EP 4 792 979 A1**
(43) Date of publication of application: **19.08.2026**
(21) Application number: 26157367.9
(22) Date of filing: 09.02.2026
(51) Int. Cl.: B25B 11/00, B25J 15/06

(54) **VACUUM SUCTION CUP**

(30) Priority: 12.02.2025 CN 202510155394; 12.12.2025 CN 202511875834
(71) Applicant: Lark (Quzhou) Tech Co Ltd, Quzhou City Zhejiang Province (CN)
(72) Inventor: FENG, Yunhe, Quzhou City (CN)
(74) Representative: Valet Patent Services Limited

(57) **Abstract**

The present invention relates to the field of electric tool technology, particularly to a vacuum suction cup, including: an installation seat, the installation seat having a first surface and a second surface opposite to the first surface; a sealing structure having a sealing end face away from the second surface; a support structure having a support end face away from the second surface. The rigidity of the support structure is greater than that of the sealing structure, and at least a part of the support structure is adjacent to the sealing structure. A minimum distance from the support end face to the second surface is greater than or equal to a minimum distance from the sealing end face to the second surface. The above mechanism significantly reduces the abnormal stress and destructive wear that the sealing structure is subjected to during operation. The present invention can greatly extend the service life of the vulnerable sealing structure in the vacuum suction cup, reduce maintenance frequency and replacement costs, and improve the durability and economy of the product.

## Description

### TECHNICAL FIELD

The present disclosure relates to the field of power tool technologies, and in particular, to a vacuum suction cup.

### BACKGROUND

Vacuum suction cup fixtures are widely used in material handling, automated production lines, and other fields. They achieve reliable gripping by creating negative pressure on a surface of an adsorbed object. A typical vacuum suction cup fixture typically includes a base element, an annular vacuum sealing element with elastic deformation capability, and a suction device. During operation, the sealing element is pressed against the surface of the object to form a sealed chamber, and the suction device works to establish and maintain a vacuum.

CN119878819A discloses a sealing structural element, which includes an annular sealing structure. The two end faces of the annular sealing structure are connected by through-holes, and a recess communicating the through-holes is formed on one end face. CN119878819A further discloses an electric suction cup, including a handle, a suction cup component, and a vacuum pump assembly. The suction cup component includes the sealing structural element and a suction cup housing, and the sealing structural element is connected to one end face of the suction cup housing. The surface of the adsorbed object, the through-holes and recess of the sealing element, and the end face of the sealing structure element connected to the suction cup housing form a second closed negative pressure space. The electric suction cup can cleverly arrange the through-holes and recess in the sealing structural components to form the second closed negative pressure space, improve the suction force of the suction cup, make the product more compact, work more efficiently, and further improve the reliability of the product.

Due to the elasticity of the sealing structure, significant deformation occurs when compressed. As the pressure increases, the sealing structure is continuously compressed, and the deformed parts (especially a lateral expansion part) are easily squeezed below the more rigid base. This squeezing effect will continue to strengthen during a continuous vacuum pumping process, and sharp edges of the base element or support structure will cut, shear, or permanently crush the sealed structure that is trapped underneath, damaging its structural integrity. Repeated compression damage can accelerate the aging, fatigue, and even failure of the sealing structure, thereby increasing maintenance and replacement costs.

Therefore, there is a lack of a solution in the existing technology that can effectively provide continuous and reliable support throughout the compression deformation process of the sealing element and fundamentally prevent it from being crushed and damaged by rigid components.

### SUMMARY

Given the background technology, the elastic sealing structure of existing vacuum suction cups is prone to compression and cutting by rigid bases due to deformation under pressure during long-term or high load use, resulting in seal failure and component damage. The present invention aims to provide an improved vacuum suction cup, with the core objective of providing continuous and reliable lateral support and protection for a sealing structure throughout its compression stroke through an innovative support structure design, thereby fundamentally avoiding damage to the sealing structure caused by compression from an installation seat or other rigid components, and improving sealing reliability, clamping stability, and extending the service life of the core components.

The present invention provides a vacuum suction cup, including:
an installation seat, which includes a first surface and a second surface opposite to the first surface;
a sealing structure, which is annular and provided on the second surface, the sealing structure includes a sealing end face away from the second surface;
a support structure, which is provided on the second surface of the installation seat, and the support structure includes a support end face away from the second surface;
the rigidity of the support structure is greater than that of the sealing structure, and at least a part of the support structure is configured to be adjacent to the sealing structure; a minimum distance from the support end face to the second surface is greater than or equal to a minimum distance from the sealing end face to the second surface.

In an embodiment, the support structure is annular, and the support structure is provided on one side of the sealing structure; or
the support structure includes a plurality of spaced support units.

In an embodiment, at least a portion of one side of the support structure close to the sealing structure is in contact with the sealing structure.

In an embodiment, the material of the support structure includes rubber, silica gel, foam, plastic or metal.

In an embodiment, the support structure is configured to absorb compressive displacement through its own elastic deformation.

In an embodiment, a deformable space is provided on the support structure, and the deformable space shrinks as the support structure is compressed.

In an embodiment, one side of the support structure is provided with a recess configured to provide a deformation space; or
a cavity configured to provide the deformation space is provided inside the support structure; or
on a plane perpendicular to the second surface, a cross-section of the support structure is S-shaped.

In an embodiment, the support part is made of an elastic material with a porous or honeycomb structure.

In an embodiment, the support structure includes a connection part and a support part, the connection part is provided on one side of the support part, the connection part is provided at one end of the support structure away from the support end face, and the sealing structure is attached to the connection part.

In an embodiment, the connection part is provided with a mating structure configured to connect with the sealing structure, and the mating structure satisfies at least one of the following conditions:
1) the mating structure is an adhesive layer or a surface coated with adhesive, and the sealing structure is fixed to the connection part by bonding;
2) the connection part is provided with a circular protrusion or groove, and the sealing structure is provided with a corresponding circular groove or protrusion.

Compared to existing technology, the vacuum suction cup provided by the present invention has the following significant beneficial effects.

Due to the fact that the rigidity of the support structure is greater than that of the sealing structure, and the minimum distance from its support end face to the installation seat surface is greater than or equal to a corresponding distance of the sealing end face of the sealing structure, the higher rigidity support structure always forms a physical barrier in the height direction during the suction cup pressing and working process. This can effectively prevent the material of the flexible sealing structure from being squeezed in and subjected to shear, cutting, or crushing by the second surface edge of the installation seat when it undergoes lateral deformation under pressure, thereby avoiding the main mechanical damage mode of the sealing structure from the structural source.

The support structure is adjacent to the sealing structure, and combined with the height and rigidity relationship mentioned above, it can provide continuous lateral restraint and support for the sealing ring. This constraint makes the deformation of the sealing structure more controllable during vacuum adsorption, helping to form a more uniform and reliable sealing line when in contact with the surface of the object, reducing the risk of air leakage caused by local excessive deformation or damage, thereby improving the reliability of vacuum adsorption and the stability of overall holding force.

The above mechanism significantly reduces the abnormal stress and destructive wear that the sealing structure is subjected to during operation, directly reducing its probability of failure due to physical damage. Therefore, the present invention can significantly extend the service life of the vulnerable sealing structure in the vacuum suction cup, reduce maintenance frequency and replacement costs, and improve the durability and economy of the product.

Other features and advantages of the present invention will be described in detail in the following section on specific embodiments.

### BRIEF DESCRIPTION OF DRAWINGS

The accompanying drawings, which form a part of the present invention, are used to provide further understanding of the present invention. The illustrative embodiments of the present invention and their description are used to explain the present invention and do not constitute undue limitation of the present invention.
FIG. 1 is a first schematic structural diagram of a vacuum suction cup according to an embodiment of the present invention.
FIG. 2 is a second schematic structural diagram of the vacuum suction cup according to an embodiment of the present invention.
FIG. 3 is a bottom view of the vacuum suction cup according to an embodiment of the present invention.
FIG. 4 is an exploded view of the vacuum suction cup according to an embodiment of the present invention.
FIG. 5 is a first cross-sectional view of the vacuum suction cup according to an embodiment taken along A-A section in FIG. 3.
FIG. 6 is a second cross-sectional view of the vacuum suction cup according to an embodiment taken along A-A section in FIG. 3.
FIG. 7 is a third cross-sectional view of the vacuum suction cup according to an embodiment taken along A-A section in FIG. 3.
FIG.8 is a fourth cross-sectional view of the vacuum suction cup according to an embodiment taken along A-A section in FIG. 3.
FIG. 9 is a third schematic structural diagram of the vacuum suction cup according to an embodiment of the present invention.

Numeral reference: 100 installation seat; 101 first surface; 102 second surface; 103 installation groove; 200 sealing structure; 201 sealing end face; 300 support structure; 301 support end face; 302 recess; 303 cavity; 304 connection part; 305 support part; 306 mating structure; 400 suction structure; 500 control structure; 600 power supply.

### DESCRIPTION OF EMBODIMENTS

The specific embodiments of the present invention will be described in detail below in combination with the accompanying drawings. It should be noted that the specific embodiments described herein are only for illustrating and explaining the present invention, and are not intended to limit the present invention.

The present invention aims to solve the long-term technical problem of damage and sealing failure caused by adjacent rigid bases squeezing and cutting flexible sealing structures due to compression deformation in existing vacuum suction cups.

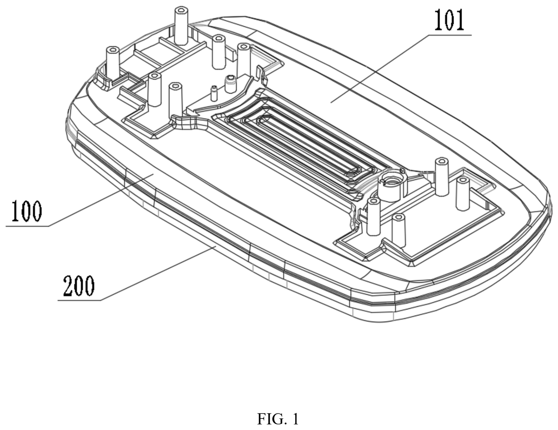

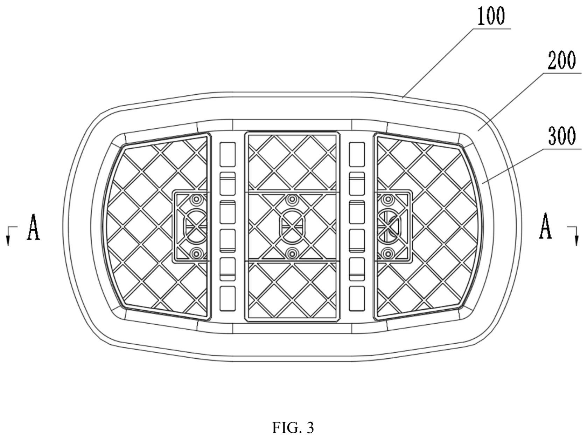

As shown in FIGs. 1 to 8, the present invention provides a vacuum suction cup, including:
an installation seat 100, which has a first surface 101 and a second surface 102 opposite to the first surface 101;
a sealing structure 200, which is annular and provided on the second surface 102, and the sealing structure 200 includes a sealing end face 201 away from the second surface 102;
a support structure 300, which is provided on the second surface 102 of the installation seat 100, and the support structure 300 includes a support end face 301 away from the second surface 102;
the rigidity of the support structure 300 is greater than that of the sealing structure 200, and at least a part of the support structure 300 is adjacent to the sealing structure 200, a minimum distance from the support end face 301 to the second surface 102 is greater than or equal to a minimum distance from the sealing end face 201 to the second surface 102.

The vacuum suction cup of the present invention, due to the fact that the rigidity of the support structure 300 is greater than that of the sealing structure 200, and the minimum distance from its support end face 301 to a surface of the installation seat 100 is greater than or equal to a corresponding distance of the sealing end face 201 of the sealing structure 200, ensures that the higher rigidity support structure 300 always forms a physical barrier in a height direction during the suction cup pressing and working process. This can effectively prevent the material of the flexible sealing structure 200 from being squeezed in and subjected to shear, cutting, or crushing by an edge of the second surface 102 of the installation seat 100 when it undergoes a lateral deformation under pressure, thereby avoiding the main mechanical damage mode of the sealing structure 200 from the structural root. The support structure 300 is arranged adjacent to the sealing structure 200, and combined with the height and rigidity relationship mentioned above, it can provide continuous a lateral restraint and support for the sealing structure 200. This constraint makes the deformation of the sealing structure 200 more controllable during vacuum adsorption, helping to form a more uniform and reliable sealing line when in contact with the surface of the object, reducing the risk of air leakage caused by local excessive deformation or damage, thereby improving the reliability of vacuum adsorption and the stability of overall holding force. The above mechanism significantly reduces abnormal stress and destructive wear that the sealing structure 200 is subjected to during operation, directly reducing its probability of failure due to physical damage. Therefore, the present invention can significantly extend the service life of the vulnerable sealing structure 200 in the vacuum suction cup, reduce maintenance frequency and replacement costs, and improve the durability and economy of the product.

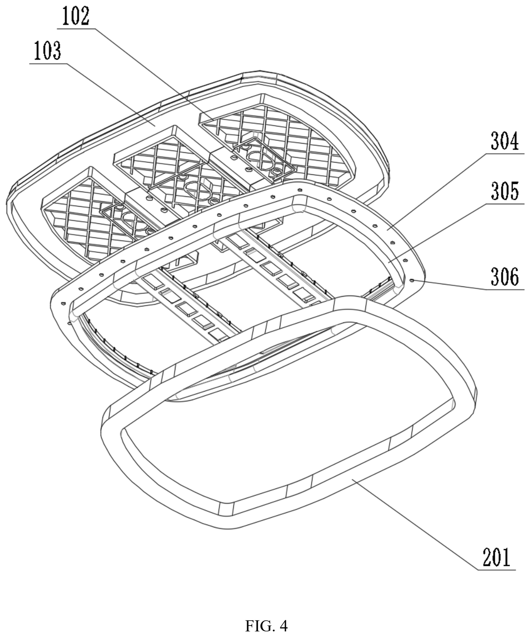

Specifically, in one embodiment, as shown in FIG. 4, the second surface 102 of the installation seat 100 may be provided with an installation groove 103. At least a part of the support structure 300, such as its connection part 304, can be provided in the installation groove 103 to achieve a stable positioning. The sealing structure 200 and/or the support structure 300 can be fixed to the installation groove 103 or other predetermined positions on the second surface 102 through adhesion, snap fit, or interference fit.

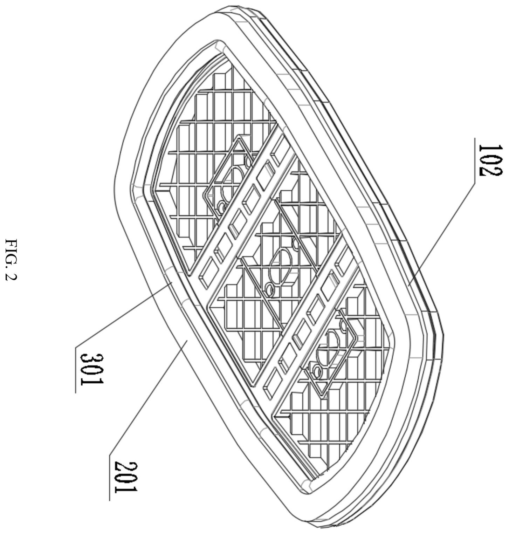

The support structure 300 has various specific implementation modes. In one embodiment, as shown in FIG. 2, the support structure 300 is annular in shape and is provided on one side of the sealing structure 200. The support structure 300 can be provided on an inner side or an outer side of the sealing structure 200, preferably, the support structure 300 is provided on both the inner and outer sides of the sealing structure 200. This continuous annular support can provide a uniform circumferential constraint for the sealing structure 200, thereby preventing overall displacement or loss of roundness during vacuum pumping, ensuring uniform distribution of sealing pressure.

In one embodiment, the support structure 300 includes a plurality of spaced support units. This spaced design can provide necessary support at critical positions while giving the sealing structure 200 a certain degree of local deformation freedom, enabling it to better adapt to surfaces with small undulations or complex contours, and improve its ability to adhere to irregular surfaces.

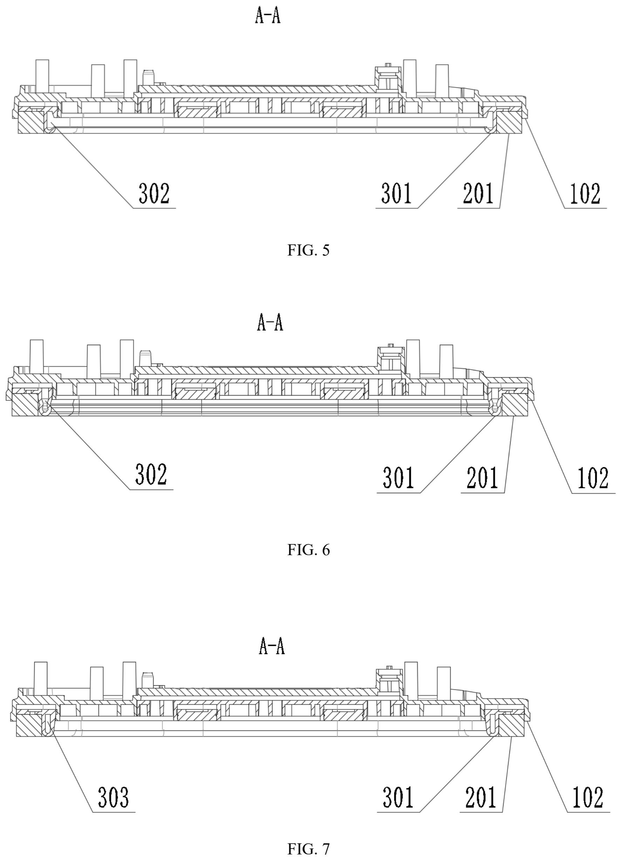

To further enhance the constraint effect, as shown in FIGs. 5 to 8, at least a portion of one side of the support structure 300 close to the sealing structure 200 can be in direct contact with the sealing structure 200. This contact type design can provide more direct and effective lateral limiting, thereby preventing the sealing structure 200 from excessive expansion or radial distortion deformation under high pressure differentials.

As for the selection of materials, the materials of the support structure 300 may include hard rubber, silica gel, engineering foam, plastic or metal. The selection principle is to ensure that its overall rigidity is higher than that of the sealing structure 200 to provide an effective barrier. At the same time, materials with certain elasticity or damping characteristics can be selected according to the application scenario to absorb impact.

Specifically, the support structure 300 itself can also be constructed to absorb a part of compressive displacement through its own elastic deformation. This makes the support structure 300 not a completely unreformable absolute rigid body, but rather capable of cooperating with the sealing structure 200 to undergo moderate deformation while providing core support functions, thereby avoiding excessive hard impact and stress concentration at the moment of contact or when encountering surface protrusions.

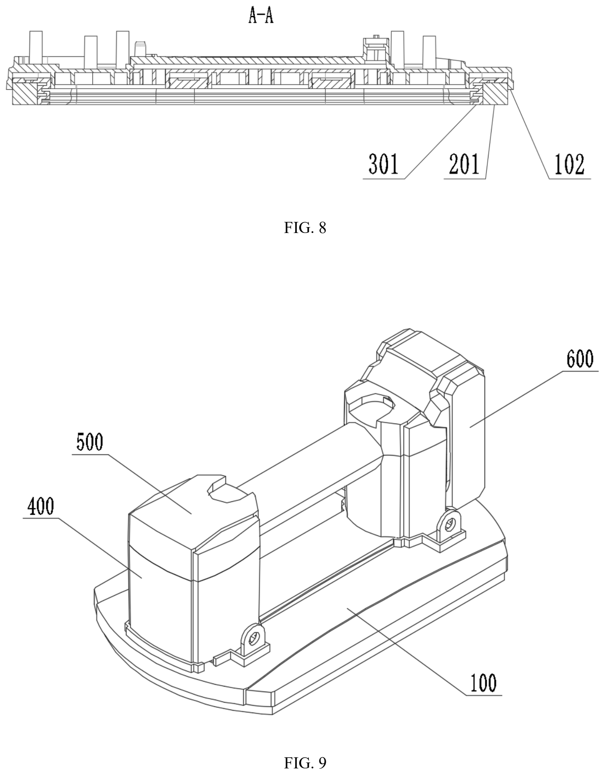

To achieve the above-mentioned elastic deformation capability, a dedicated deformation space can be provided on the support structure 300, and the deformation space shrinks as the support structure 300 is compressed to absorb energy. For example, as shown in FIGs. 5 and 6, a recess 302 configured to provide the deformation space can be provided on one side of the support structure 300. Or as shown in FIG. 7, a closed or semi-closed cavity 303 is provided inside the support structure 300; or as shown in FIG. 8, a cross-section of the support structure 300 can be arranged as an elastic bending S-shape or wavy shape on a plane perpendicular to the second surface 102. These designs can provide good cushioning performance while ensuring support stiffness.

Besides that, the part of the support structure 300 that directly provides support function (referred to as the support part 305) can be made of elastic materials with porous or honeycomb structures. This type of material has a lightweight structure and can provide nonlinear but controllable elastic response when a hole wall bends and deforms during compression, rendering it very suitable for applications that require precise control of compression stroke and support force.

In terms of structural integration, as shown in FIG. 4, the support structure 300 may include a connection part 304 and a support part 305. The connection part 304 is provided on one side of the support part 305, usually provided at one end of the support structure 300 away from the support end face 301 (i.e. close to the installation seat 100), and the sealing structure 200 is attached to the connection part 304. This split design facilitates the optimization and combination of components with different materials and functions, and also facilitates maintenance and replacement. Furthermore, this design ensures a tight fit between the sealing structure 200 and the support structure 300, which is more conducive to the support structure 300 playing a supporting role.

To ensure reliable connection between the sealing structure 200 and the support structure 300, the connection part 304 may be provided with a mating structure 306 configured to connect with the sealing structure 200. For example, the mating structure 306 can be an adhesive layer or a surface coated with adhesive, allowing the sealing structure 200 to be fixed by bonding; or as shown in FIG. 4, a circular protrusion (or groove) is provided on the connection part 304, and a corresponding circular groove (or protrusion) is provided on the sealing structure 200, thereby achieving mechanical interlocking through clamping to prevent detachment.

In some application scenarios, the vacuum suction cup and the suction structure 400 of the present invention together form a complete adsorption system, as shown in FIG. 9. This integrated solution ensures the high efficiency, stability, and controllability of the vacuum adsorption function.

The suction structure 400, such as a micro vacuum pump or a fan, is preferably directly integrated on the first surface 101 of the installation seat 100 or compactly connected to it, and is connected to an adsorption chamber surrounded by the sealing structure 200, the support structure 300, and the second surface 102 of the installation seat 100 through an airflow channel passing through the installation seat 100. This integrated design has a compact structure, reduces pipelines, and improves reliability.

The system further includes a control structure 500 and a power supply 600. The control structure 500 can be integrated into a suction cup handle or the installation seat 100, configured to control the start, stop and power adjustment of the suction structure 400, and can automatically maintain the optimal suction pressure according to preset programs or sensor feedback (such as a vacuum sensor). The power supply 600 can use a rechargeable battery pack to achieve wireless and portable operation of the system.

In order to safely and quickly release an object, the system has set up a release mechanism. This mechanism is typically a controlled solenoid valve integrated into the airflow channel. When it is necessary to release, the control structure 500 triggers the solenoid valve to open, allowing external air to quickly enter the adsorption chamber, balance the pressure, and the adsorption force instantly disappears, allowing the object to be smoothly detached.

The complete workflow of the system is as follows: simultaneously attaching the sealing end face 201 and the support end face 301 of the vacuum suction cup to a surface of an object; the suction structure 400 is activated, the air inside the chamber is extracted to form negative pressure, and the object is firmly adsorbed. During this process, the support structure 300 protects the sealing structure 200 from damage and assists in forming a stable seal. After the handling or operation is completed, the release mechanism is triggered, air flows in, the adsorption force is released, and the suction cup moves away.

## Claims

1. A vacuum suction cup, comprising:
an installation seat (100), which comprises a first surface (101) and a second surface (102) opposite to the first surface (101);
a sealing structure (200), which is annular and provided on the second surface (102), the sealing structure (200) comprises a sealing end face (201) away from the second surface (102);
a support structure (300), which is provided on the second surface (102) of the installation seat (100), and the support structure (300) comprises a support end face (301) away from the second surface (102);
the rigidity of the support structure (300) is greater than that of the sealing structure (200), and at least a part of the support structure (300) is configured to be adjacent to the sealing structure (200);
a minimum distance from the support end face (301) to the second surface (102) is greater than or equal to a minimum distance from the sealing end face (201) to the second surface (102).

2. The vacuum suction cup according to claim 1, wherein the support structure (300) is annular, and the support structure (300) is provided on one side of the sealing structure (200); or
the support structure (300) comprises a plurality of spaced support units.

3. The vacuum suction cup according to claim 1, wherein at least a portion of one side of the support structure (300) close to the sealing structure (200) is in contact with the sealing structure (200).

4. The vacuum suction cup according to claim 1, wherein the material of the support structure (300) includes rubber, silica gel, foam, plastic or metal.

5. The vacuum suction cup according to claim 1, wherein the support structure (300) is configured to absorb compressive displacement through its own elastic deformation.

6. The vacuum suction cup according to claim 5, wherein a deformable space is provided on the support structure (300), and the deformable space shrinks as the support structure (300) is compressed.

7. The vacuum suction cup according to claim 6, wherein one side of the support structure (300) is provided with a recess (302) configured to provide a deformation space; or
a cavity (303) configured to provide the deformation space is provided inside the support structure (300); or
on a plane perpendicular to the second surface (102), a cross-section of the support structure (300) is S-shaped.

8. The vacuum suction cup according to claim 5, wherein the support part (305) is made of an elastic material with a porous or honeycomb structure.

9. The vacuum suction cup according to claim 1, wherein the support structure (300) comprises a connection part (304) and a support part (305), the connection part (304) is provided on one side of the support part (305), the connection part (304)is provided at one end of the support structure (300) away from the support end face (301), and the sealing structure (200) is attached to the connection part (304).

10. The vacuum suction cup according to claim 9, wherein the connection part (304) is provided with a mating structure (306) configured to connect with the sealing structure (200), and the mating structure (306) satisfies at least one of the following conditions:
1) the mating structure (306) is an adhesive layer or a surface coated with adhesive, and the sealing structure (200) is fixed to the connection part (304) by bonding;
2) the connection part (304) is provided with a circular protrusion or groove, and the sealing structure (200) is provided with a corresponding circular groove or protrusion.
